# EUROPÄISCHE PATENTSCHRIFT

(11) **EP 3 003 669 B1**
(45) Veröffentlichungstag und Bekanntmachung des Hinweises auf die Patenterteilung: **11.07.2018**
(21) Anmeldenummer: 14724479.2
(22) Anmeldetag: 19.05.2014
(51) Int. Cl.: B29B 17/02, C08J 11/08, C08J 11/20, D21B 1/32, D21C 5/02, C22B 7/00, C22B 21/00, D21H 11/14, B29L 9/00, B29L 31/00

(54) **VERFAHREN ZUR RÜCKGEWINNUNG VON ROHSTOFFEN AUS PAPIERHALTIGEN ABFÄLLEN MITTELS IONISCHER FLÜSSIGKEITEN**
METHOD FOR RECOVERING RAW MATERIALS FROM PAPER-CONTAINING WASTES BY MEANS OF IONIC LIQUIDS
PROCÉDÉ PERMETTANT DE RÉCUPÉRER AU MOYEN DE LIQUIDES IONIQUES DES MATIÈRES PREMIÈRES PRÉSENTES DANS DES DÉCHETS CONTENANT DU PAPIER

(30) Priorität: 31.05.2013 DE 102013009138
(43) Veröffentlichungstag der Anmeldung: 13.04.2016
(73) Patentinhaber: Tuliport S.a.r.l., 1140 Luxemburg (LU)
(72) Erfinder: POMMERSHEIM, Rainer, 55116 Mainz (DE)
(74) Vertreter: Kruspig, Volkmar
(86) Internationale Anmeldenummer: PCT/EP2014/060206
(87) Internationale Veröffentlichungsnummer: WO 2014/191244

(56) Entgegenhaltungen:
- EP-A2- 0 568 791
- WO-A1-92/05215
- WO-A1-98/18607
- WO-A2-03/029329
- IN-A1- 2017M UM2 008

## Beschreibung

Die Erfindung bezieht sich auf eine Methode zur Rückgewinnung von Rohstoffen aus Abfällen wie z.B. Verpackungsmaterialien oder Verbundwerkstoffen, sowie sonstigen Materialien oder Materialgemischen. Ein Bestandteil dieser Materialien oder Gemische ist dabei vorzugsweise Papier oder ein anderer auf Zellulose basierter Stoff. Weitere Bestandteile sind in der Regel Kunststoff und/oder Aluminium oder andere Metalle. Diese Stoffe werden in dem erfindungsgemäßen Verfahren in ihrer Primärform als Rohstoff zurück gewonnen. Dabei wird die Zellulose in so genannten Ionischen Flüssigkeiten, und der Kunststoff in geeigneten Kohlenwasserstoffen gelöst und hinterher wieder ausgefällt. Der Metalleinteil wird als Feststoff aus den Lösungen abgetrennt. Die Lösungsmittel werden zurück gewonnen. Da so eine Reinigung auf molekularer Ebene erfolgt, sind die erhaltenen Rohstoffe von hoher Reinheit und Qualität. Sie können anschließend wie konventionell gewonnen Rohstoffe verwendet und weiterverarbeitet werden.

Verpackungsmaterialien sind aus aktuellen Produktkreisläufen nicht mehr wegzudenken. Insbesondere bei der Verpackung von Lebensmitteln, aber auch anderer Konsumgüter werden dabei recht hochwertige Stoffe wie Papier, also Zellulose, Kunststoffe und Metalle wie beispielsweise Aluminium verwendet. Obwohl in den letzten Jahren vermehrt Anstrengungen in Bezug auf die Rückgewinnung dieser Materialien zu verzeichnen sind, wird dennoch aktuell der überwiegende Teil dieser Stoffe thermisch verwertet also verbrannt. Daran konnten auch Rücknahmesysteme wie beispielsweise in Deutschland das duale System oder der Grüne Punkt nicht viel ändern. Demzufolge gehen jährlich Unmengen an wertvollen Rohstoffen verloren.

Betrachten wir den Müll, der aus Verpackungsmaterialien anfällt etwas näher, so können wir diesen in zwei große Gruppen unterteilen. Zum einen handelt es sich dabei um Gemische von Verpackungen die ihrerseits aus einzelnen Materialien bestehen, zum anderen um so genannte Verbundverpackungen, die aus einzelnen Lagen unterschiedlicher Stoffe aufgebaut sind. Selbstverständlich sind in der Praxis Gemische aus diesen beiden Klassen häufig die Regel. Unabhängig davon ob man nun Gemische von Verpackungen oder Verbundverpackungen betrachtet, so bestehen die daraus resultierenden Verpackungsabfälle in der Regel immer aus einem Papieranteil, also Zellulose, einem Kunststoffanteil und einem Metallanteil wie zum Beispiel Aluminium.

Obwohl der überwiegende Anteil des Verpackungsmülls verbrannt wird, gibt es auch industriell genutzte Verfahren, die eine zumindest teilweise Rückgewinnung der Rohstoffe aus diesen Verpackungen zum Ziel haben. Handelt es sich bei den Verpackungen um Gemische, so ist eine Auftrennung in die einzelnen Komponenten derzeit auch großtechnisch möglich. Schwieriger wird es jedoch bei den Verbundverpackungen. Hier findet bei nahezu allen derzeit technisch eingesetzten Verfahren aktuell lediglich eine Abtrennung des Papieranteils vom Aluminium / Kunststoff Verbund statt. Eine tatsächliche Rückgewinnung der Materialien in ihrer ursprünglichen Form ist nur eingeschränkt oder gar nicht möglich.

Die Folge davon ist, dass die zurückgewonnen Materialien lediglich zur Herstellung von Sekundärprodukten verwendet werden können, wie z.B. Kartonagen aus dem Papieranteil und Spritzgussgegenstände minderer Qualität aus dem Kunststoff/Aluminiumverbund.

Nutzt man die Stoffe aus diesen Verpackungsmaterialien hingegen als primäre Rohstoffe, so haben sie gegenüber den konventionell gewonnen Materialien einen entscheidenden Vorteil: Sie müssen eine ganze Reihe von Prozessschritten nicht mehr durchlaufen, die zur Herstellung konventioneller Rohstoffe erforderlich sind. Denkt man dabei an den Aufwand der betrieben wird, um beispielsweise aus Bauxit metallisches Aluminium zu erhalten, oder um aus Erdöl Polyethylen zu synthetisieren oder schlicht und einfach um von der Pflanze auf dem Feld Zellulose zu gewinnen, wird klar wie vorteilhaft eine Nutzung dieser Materialien aus dem Verpackungsabfall ist.

Besonders deutlich wird dieser Vorteil im Fall der Zellulose.

Das älteste und gleichzeitig am meisten benutzte Verfahren zur Verarbeitung von Zellulose ist das Viskose(Xanthogenat)verfahren. Dabei wird die Zellulose in ein lösliches Derivat überführt. Diese derivatisierte Cellulose lässt sich anschließend weiterverarbeiten. Dieser Prozess bedient sich extrem ätzender und umweltbelastender Chemikalien wie z.B. Natronlauge, Schwefelkohlenstoff usw.

Seit einigen Jahren stehen jedoch neue, sehr viel versprechende, umweltverträgliche Lösungsmittel zur Verfügung, die für ein solches Verfahren geeignet sind. Mittels dieser, sogenannten Ionischen Flüssigkeiten, d.h. flüssige ionogene Verbindungen, kann Zellulose unter bestimmten Reaktionsbedingungen aufgelöst werden. Aus dieser Lösung kann die Zellulose durch ein Fällmittel, in der Regel Wasser, wieder ausgefällt werden.

So wird beispielsweise in der Zeitschrift "Chemical Fibers International", Nr 6/2006 auf Seite 344 eine Methode beschrieben, bei der mit Hilfe von [EMIM]Acatat also einer Ionischen Flüssigkeit, Zellulose gelöst wird und anschließend daraus Zellfasern gewonnen werden. Die Verwendung Ionischer Flüssigkeiten ermöglicht eine direkte Überführung von Zellulose in Lösung, dabei ist eine vorherige Derivatisierung nicht notwendig.

Allerdings unterliegt ein solches Verfahren bestimmten Beschränkungen, wenn es um dessen Verwendung für Zellstoffe allgemein geht. So verhindern z.B. Humine die Wiederverwendbarkeit des Lösemittels, also der Ionischen Flüssigkeit, im Falle der Auflösung von Holz-, Bambus, Kokosnußschalen oder analogen Ausgangsmaterialien.

In Verpackungsmaterialien (Papier, Kartonagen usw.) und Verbundverpackungen sind die störenden Humine jedoch bereits durch den vorangegangenen klassischen Produktionsprozess entfernt worden und die Zellulose besitzt eine ausreichende Qualität. Demnach ist ein Verfahren, wie in der vorliegenden Erfindung beschrieben, das mit Ionischen Flüssigkeiten als Lösungsmittel arbeitet und das Papier aus Abfall als Rohstoffquelle nutzt, für diese Klasse von Zellstoffen zur Gewinnung von Zellulose gut geeignet. Dies ermöglicht eine besonders wirtschaftliche und umweltverträgliche Gewinnung von Zellulose, einem besonders wertvollen Primärstoff.

Verfahren, die im Unterschied dazu auf dem Einsatz konventioneller Lösungsmittel wie z.B. Kohlenwasserstoffen basieren, sind insbesondere zum Recyceln von Kunststoffabfällen seit Jahren bekannt und in der Literatur an mehreren Stellen zu finden.

So beschreibt beispielsweise die Patentanmeldung EP06754237 ein Verfahren zum Recycling von Kunststoffen, die mindestens zwei auf Polystyrol basierende Polymere, Copolymere oder Blends hiervon enthalten. Hierbei werden die unterschiedlichen Polymere zuerst in Lösung gebracht und dann durch eine fraktionierte Fällung voneinander getrennt.

In der Anmeldung EP06743132 wird der Einsatz von Lösungsmitteln unter anderem auch zur Trennung von mit Flammschutzmitteln additivierten Polymeren auf der Basis von Polystyrol, dessen Copolymeren und/oder Blends genutzt.

EP1392766 hat ein Verfahren zum Gegenstand, zur Gewinnung von Polyolefinen wie z.B. LDPE aus gebrauchten Kunststofffolien mit folgenden Schritten: Extrahieren von niedermolekularen Bestandteilen aus dem Material, das in einem zweiten organischen Lösungsmittel gelöst ist, selektives Lösen des so behandelten Folienmaterials, Ausfällen mindestens eines störenden Polymeres aus der Lösung und Gewinnung des Polyethylens aus der verbleibenden Polymerlösung.

Andere Schutzrechte befassen sich primär mit der Problematik der Trennung einzelner Anteile aus einem Abfallgemisch mittels physikalischer Methoden.

Die Anmeldung EP2364246 betrifft ein Verfahren und eine Anlage zum Abtrennen einzelner Wertstoffe aus gemischtem, insbesondere zerkleinerte Kunststoffabfall, der Folien-, Verbundfolien- und Hartkunststoffteile enthält. Etwaige Störstoffe werden vom Kunststoffabfall getrennt und der Kunststoffabfall durch eine Schwimm-Trennung in unterschiedliche Fraktionen unterteilt.

EP 2463071 befasst sich mit einer Methode zur Verwertung von Verbundverpackungen wie z.B. Tetra-Packs, die bekanntermaßen ursprünglich zu 75% Zellulose, 20% LDPE und ca. 5% Aluminium enthalten. In einem ersten Schritt wird der Zelluloseanteil entfernt. Die Erfindung konzentriert sich auf die weitere Verwertung des verbleibenden Verbundes, der nach der ersten Behandlung aus 4% Zellulose, 78% LDPE und 18% Aluminium besteht. Ziel ist es, ein Granulat zu erzeugen, das den Kunststoff zwar nicht sortenrein enthält, diesen aber spritzgussfähig macht. Dies wird dadurch erreicht, dass die Partikel sehr klein zermahlen werden, so dass die Metallanteile den Spritzgussvorgang nicht stören. Ein solches Granulat kann zu Herstellung von Sekundärprodukten niedriger Qualität, wie sie im einleitenden Teil erwähnt wurden verwendet werden.

Einen anderen Weg geht die Erfindung EP 1979497. Hier wird der Kunststoff-Aluminium Verbund getrennt. Dies erfolgt durch ein mehrstufiges Schmelzen. In einem ersten Schritt wird der Kunststoff geschmolzen und abgetrennt. Anschließend wird eine Schmelze aus dem Aluminium erzeugt, wobei die anhaften Kunststoff Reste verbrennen.

Aus IN 2017 MUM 2008 A1 ist ein Verfahren zur Rückgewinnung von Zellulose aus papierhaltigen Abfällen mittels Ionischer Flüssigkeiten vorbekannt. Die dortige Lehre ist konzentriert auf das Herauslösen der Zellulose mit anschließender Rückgewinnung durch deren Fällung. Konkret wird Zellulose rückgewonnen, wohingegen übrige Komponenten abgetrennt und verworfen werden. Als ionische Flüssigkeit kommt BMIMCI zum Einsatz, was eine Zugabe von DMSO und weitere Trennschritte bei der Rückgewinnung der Ionischen Flüssigkeit erforderlich macht.

Bei der Lehre nach der WO 98/18607 A1 handelt es sich um ein Verfahren zum Aufschluss von Abfällen, die wenigstens teilweise wiederverwertbare Anteile enthalten. Die einzelnen Materialien werden durch Wasch- oder Dichtetrennschritte voneinander getrennt. Die gewonnenen Materialien sind quasi unveränderte Inputmaterialien von minderer Qualität, da sie mit Additiven und anderen Stoffen verunreinigt sind bzw. verunreinigt bleiben.

In WO 92/05215 A1 wird ein Verfahren beschrieben, durch welches Metalle aus Abfällen zurückgewonnen werden können, wobei die Metalle überwiegend mit Kunststoffen behaftet sind. Dabei bedient sich dieses Verfahren der bekannten Tatsache, dass Kunststoffe in geeigneten Lösungsmitteln gelöst und anschließend ausgefällt werden können. Das Metall wird dabei als Feststoff aus der Lösung abgetrennt.
Die hier stellvertretend aufgelisteten Literaturstellen präsentieren jede für sich Lösungsansätze, wie Verbundmaterialien oder Materialgemische getrennt oder einzelne Komponenten daraus einer Wiederverwertung zugeführt werden können. Jedoch ist keine davon eine Komplettlösung oder aber die gewonnenen Materialien entsprechen in ihrer Beschaffung und Qualität nicht Rohstoff-Neuware.

Ausgehend von dieser Sachlage liegt der vorliegenden Erfindung die Aufgabe zu Grunde ein einheitliches Verfahren zu beschreiben, bei dem alle drei Hauptkomponenten z.B. von Verbundverpackungen oder Gemischen von Verpackungsmaterialen, und zwar Zellulose, Kunststoff und Metall in ihrer Primärform und in einer Qualität zurück gewonnen werden können, die weitestgehend Neuware entspricht.

Erfindungsgemäß geschieht dies in einem Lösemittel basierten Prozess. Der Kerngedanke ist es, geeignete Ionische Flüssigkeiten zum Herauslösen der Zellulose aus dem Papieranteil des Abfalls zu verwenden, und diesen Schritt mit anderen Lösemittel basierten Schritten so zu verknüpfen, dass daraus ein einheitliches Verfahren entsteht, in dem sowohl Zellulose als auch Kunststoff und Metall zurückgewonnen werden können. Dabei wird der Kunststoff ebenfalls aus dem Abfall herausgelöst, jedoch mit konventionellen Lösungsmitteln, wie Kohlenwasserstoffen. Das Metall wird als Feststoff abgetrennt. Je nach Zusammensetzung des Inputmaterials kann der Prozess nur eines der o.g. Materialien liefern, zwei oder alle drei.

Ein zentrales Element der Erfindung ist es demnach, den papierhaltigen Anteil aus dem Abfall als Rohstoffquelle zur Gewinnung neuwertiger, Zellulose in hoher Qualität zu nutzen. Bei dem Papierabfall handelt es sich bekanntlich um bereits prozessierte Zellulose, der z.B. die Humine fehlen. Deshalb können hier Ionische Flüssigkeiten wirtschaftlich eingesetzt werden, was bei anderen Ausgangsmaterialien wie z.B. Holz nicht der Fall ist.

Der Prozess gestaltet sich demnach wie folgt:
Als Rohmaterial, dem so genannten Input, dient papierhaltiger Abfall wie er von den Wertstoffhöfen gesammelt und angeboten wird. Er kann demnach sowohl Verbundverpackungen beinhalten als auch Gemische von unterschiedlichen Verpackungen oder auch Altpapier. Dieses Material enthält neben den eigentlichen Wertstoffen auch noch mechanische Verunreinigungen wie beispielsweise Papier Glas, Metalle, anhaftende Produkt und Speisereste usw. Bei der mechanischen Aufbereitung werden diese Verunreinigungen im Rahmen der Vorbehandlung entfernt. Ebenfalls bei der Vorbehandlung werden die Materialen zerkleinert und in einem Dichtetrennschritt abgetrennt, so dass sie der weiteren Verarbeitung zugeführt werden können.

Es folgt ein anschließendes Abtrennen des Zellulosehaltigen Anteils des im zweiten Schritt aufbereiteten Materials mittels Wasser unter Erhalt einer Zellstofffraktion und einer verbleibenden Verbundfraktion. Daran schließt sich ein Trocknen des Zellulosehaltigen Anteils an.

Die so erhaltene Fraktion wird dann einer selektiven Behandlung mit Lösungsmitteln unterzogen. Bis auf das Aluminium werden die Stoffe vollständig gelöst. Das unlösliche Aluminium kann durch Filtration oder gravimetrische Trennverfahren (Sedimentation, Zentrifugation) bereits nach dem Lösevorgang der Zellulose und des Polyethylens in Reinform aus dem Prozess gewonnen werden. Das Metall wird aus der Verbundfraktion als Feststoff abgetrennt und getrocknet.

Aufgrund der Tatsache, dass ganz spezifische, Lösungsmittel zum Einsatz kommen, ist es möglich, gezielt die Zellulose und in einem weiteren Schritt auch das Polyethylen oder andere Kunststoffe in Lösung zu bringen und anschließend zu fällen. Additive, Verunreinigungen und selbst beschädigte Polymerketten bleiben zurück. Dadurch wird praktisch jedes einzelne Molekül gereinigt. Die durch Trocknen erhaltene Zellulose und auch das granulierte Polyethylen oder anderer Kunststoff unterscheidet sich molekular und auch in den Eigenschaften nicht von konventionell erhaltener Neuware.

Die eingesetzten Lösungsmittel werden aufgearbeitet und in den Prozess zurückgeführt. Durch diesen geschlossenen Kreislauf werden Umweltbelastungen vermieden und die Wirtschaftlichkeit des Verfahrens gesteigert.

Der Wahl der geeigneten Lösungsmittel ist demnach im Prozess von entscheidender Bedeutung. In diesem Zusammenhang sind zwei Stoffklassen, die im Prozess in Lösung gebracht werden sollen zu unterscheiden: Die Kunststoffe und die Zellulose.

In Bezug auf die in den Gemischen vorkommenden Kunststoffe muss man zwischen den Polyolefinen wie PE und PP, den Polystyrol basierten Kunststoffen, den Polyestern und sonstigen Kunststoffen unterscheiden. Wenn die Kunststoffe in freier Form vorliegen, also nicht als Teile von Verbundverpackungen, kann man sie aufgrund ihrer unterschiedlichen Dichte in Trennschritten, die dem eigentlichen Prozess vorgelagert sind, voneinander trennen und im Hauptprozess getrennt behandeln.

Bei den Verbundverpackungen muss der Kunststoff erst im eigentlichen Prozess vom Verbund getrennt also herausgelöst werden. Dabei handelt es sich hauptsächlich um Polyethylen, also ein Polyolefin. Diese Kunststoffklasse zeichnet sich durch eine hohe Beständigkeit gegenüber konventionellen Lösungsmitteln wie beispielsweise Aceton, Ethylacetat usw. aus.

Bei Temperaturen über 60° C kann Polyethylen jedoch in einigen Kohlenwasserstoffen wie z.B. Xylole, Hexane usw. gelöst werden. Auch wirken sich Vorbehandlungen mit Chemikalien positiv auf die Löslichkeit aus, da dadurch die Hydrophobizität der Oberfläche reduziert werden kann.

Bei dem hier beschriebenen Verfahren können einzelne der o.g. Lösungsmittel eingesetzt werden oder Gemische von unterschiedlichen, flüssigen Kohlenwasserstoffen, die speziell auf das in den Verpackungen vorhandene Polyethylen abgestimmt sind.

Zum Lösen der Zellulose aus dem Verpackungsabfall allgemein aber auch aus den Verbundverpackungen im Speziellen werden erfindungsgemäß so genannte Ionische Flüssigkeiten eingesetzt.

Unter dem Begriff der Ionischen Flüssigkeiten (engl. "ionic liquids") versteht man Flüssigkeiten die ausschließlich aus Ionen aufgebaut sind. Es handelt sich dabei um geschmolzene Salze organischer Verbindungen oder eutektische Gemische von organischen und anorganischen Salzen.

Die prinzipielle Eignung von Ionischen Flüssigkeiten als Lösemittel für Polysacharide, also auch für Zellulose ist seit Jahren literaturbekannt. Eine solche Ionische Flüssigkeit ist beispielsweise das 1-Butyl-3-methylimidazoliumchlorid [BMIM]Cl. [BMIM]Cl löst effektiv Zellulose da das Chlorid Anion als Akzeptor der Wasserstoffbrücken fungiert. Die Wechselwirkung des Chlorids mit den Hydroxylgruppen der Cellulose führt zu einer Auflösung der übermolekularen Ordnung der Cellulose und die einzelnen Biomoleküle werden von der ionischen Flüssigkeit umschlossen.

Ein anderes, für das hier beschriebene Verfahren geeignete Lösungsmittel ist z.B. das Ethlyl-methylimmidazoliumacetat [EMIM]OAc (siehe hierzu auch den einleitenden Teil). Sehr gute Ergebnisse lassen sich bei dem Lösen der Zellulose beispielsweise auch mit [BMIM]CF₃SO₃ als Lösungsmittel erzielen.

Aus der Kunststofflösung wird das Lösungsmittel extrahiert und das restliche Lösungsmittel aus dem Kunststoff rückgewonnen sowie der Kunststoff extrudiert.

Als Resultat können mit Hilfe dieser Ionischen Flüssigkeiten aus dem Papier- oder Zellstoffanteil aus den Abfällen und Verbundverpackungen Lösungen hergestellt werden, welche zu hohen Anteilen Zellulose enthalten (bis zu 50 % und mehr).

Die Regenerierung der gelösten Zellulose erfolgt anschließend durch Zugabe von Wasser. Dabei bildet sich ein ausgeprägtes Wasserstoffbrücken-Netzwerk aus, wobei die Zellulose kristallin aus der Lösung ausfällt und als Feststoff abgetrennt werden kann.

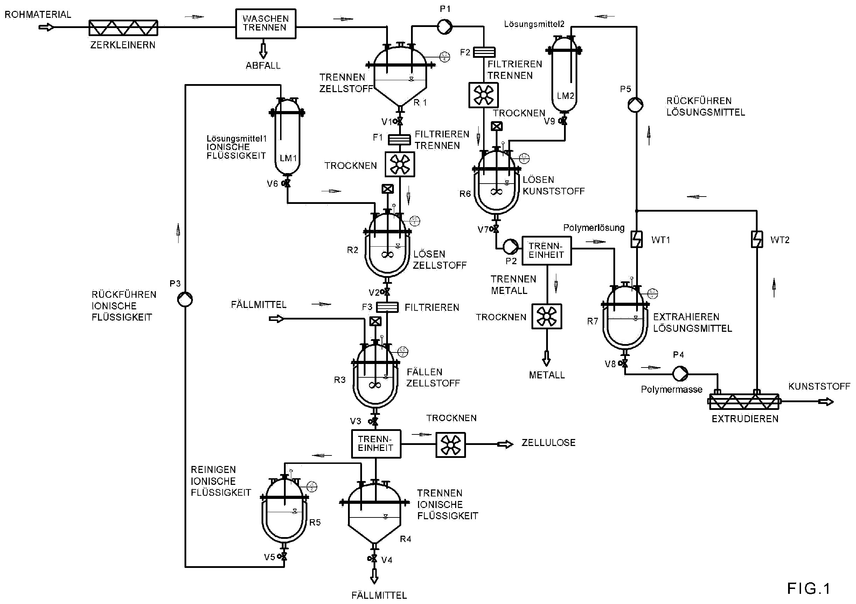

Nachfolgend sind einige Beispiele für die technische Umsetzung eines solchen Verfahrens dargestellt. Dabei handelt es sich um den in [Fig. 1] dargestellten Prozess:

### Beispiel 1:

### Rohmaterial mit hohem Papieranteil:

In einem ersten Schritt wird der wertstoffhaltige Abfall oder der Verpackungsmüll sortiert und gereinigt. Als Input dient eine Fraktion, die hauptsächlich aus papierhaltigen Abfällen oder Altpapier besteht.

Dieses Rohmaterial wird zerkleinert [ZERKLEINERN] und in einem oder mehreren anschließenden Wasch- und Trennschritten [WASCHEN/TRENNEN] von anhaftenden Verunreinigungen, anderen Materialien und Kunststoffen getrennt. Die Trennung erfolgt dabei in Dichtetrennbecken mit geeigneten Dichtetrennmedien, wie sie in Recyclinganlagen üblicherweise eingesetzt werden.

Bei dem so aufbereiteten Material wird im Reaktor [R1] der Papieranteil mittels Wasser nochmals gereinigt, so dass eine relativ saubere, wässrige Zellstofffraktion entsteht.

Aus der Zellstofffraktion wird anschließend der Feststoffanteil herausgefiltert [F1] und getrocknet [TROCKNEN] und in den Reaktor [R2] befördert. Hier wird er mit der Ionischen Flüssigkeit aus dem Vorratstank [LM1] versetzt, wobei die Zellulose in Lösung geht. Die so erhaltene Flüssigkeit wird anschließend durch den Filter [F3] von mechanischen Verunreinigungen und ungelösten Anteilen getrennt und der Fällung in [R3] zugeführt.

In [R3] wird die Zellulose durch die Zuführung von Wasser [FÄLLMITTEL] gefällt wodurch ein Feststoff, die Zellulose entsteht. Diese wird anschließend in einer Trenneinheit [TRENNEINHEIT] abgetrennt und evtl. nochmals gewaschen. Bei der Trenneinheit kann es sich um einen Filter, eine Zentrifuge, einen Dekanter oder ein anderes Gerät handeln, das geeignet ist einen Feststoff aus einer Suspension abzutrennen. Die so erhalten Zellulose wird anschließend getrocknet und kann wie konventionell erhaltene Zellulose weiter verarbeitet werden.

Aus der Flüssigkeit aus der Trenneinheit wird in [R4] anschließend die Ionische Flüssigkeit zurückgewonnen. Da Ionische Flüssigkeiten in der Regel mit Wasser nicht mischbar sind, kann die Trennung wie bei anderen Zwei-Phasensystem gravimetrisch erfolgen. Evtl. kann auch eine Zentrifuge eingesetzt werden. Anschießend wird die Ionische Flüssigkeit in [R5] z.B. durch Destillation gereinigt und über [P3] in den Kreislauf zurückgeführt.

### Beispiel 2:

### Rohmaterial mit hohem Anteil an Verbundverpackungen:

Wie im Beispiel 1 wird auch hier in einem ersten Schritt der wertstoffhaltige Abfall oder Verpackungsmüll sortiert und gereinigt. Als Input dient eine Fraktion, die hauptsächlich aus Verbundverpackungen besteht.

Dieses Inputmaterial wird zerkleinert [ZERKLEINERN] und in einem oder mehreren anschließenden Wasch- und Trennschritten [WASCHEN/TRENNEN] von anhaftenden Verunreinigungen, anderen Materialien und Kunststoffen getrennt. Die Trennung erfolgt dabei in Dichtetrennbecken mit geeigneten Dichtetrennmedien, wie sie in Recyclinganlagen üblicherweise eingesetzt werden.

Bei dem so aufbereiteten Material wird im Reaktor [R1] der Papieranteil mittels Wasser vom restlichen Verbund gelöst, so dass zwei Fraktionen entstehen: Der Zellstoff und der verbliebene Verbund.

Die Zellstofffraktion aus [R1] wird wie im Beispiel 1 beschrieben weiter verarbeitet.

Der Kunststoff/Aluminiumverbund aus [R1] wird als Suspension über [P1] in die Filtrier- und Trenneinheit F2 befördert. P1 kann auch eine Förderschnecke sein. In [F2] wird der Feststoffanteil abgetrennt. Anschließend wird er getrocknet [TROCKNEN] und in [R6] befördert. Hier wird durch die Zugabe eines geeigneten Kohlenwasserstoffs oder Gemisches als Lösungsmittel [Lösungsmittel 2] aus dem Vorratstank [LM2] der Kunststoff, also hier das Polyethylen (PE) vom Verbund abgelöst.

Diese neue Suspension gelangt dann in eine Trenneinheit [TRENNEINHEIT] die entweder als Filter, als Dekanter oder als Zentrifuge ausgeführt werden kann. Hier wird das Metall, also das Aluminium aus der PE-Lösung als Feststoff abgetrennt und danach getrocknet [TROCKNEN]. Anschließend kann es einen weitere Verarbeitung wie konventionell gewonnenes Aluminium zugeführt werden.

Aus der PE-Lösung aus der Trenneinheit wird in [R7] das Lösungsmittel destillativ abtrennt, über [WT1] abgekühlt und über [P5] in der Vorratstank [LM2] zurückgeführt. Die resultierende Polymermasse, die immer noch einen hohen Lösungsmittelanteil enthält wird in einen Extruder befördert, wo das restliche Lösungsmittel verdampft. Das Lösungsmittel wird in [WT2] kondensiert und in den Kreislauf zurück befördert. Der erhaltene Kunststoff (PE) kann wie konventionell hergestelltes PE weiter verarbeitet werden.

### Beispiel 3:

### Rohmaterial als Gemisch unterschiedlicher Materialien:

Wie in den vorangegangenen Beispielen wird auch hier in einem ersten Schritt der wertstoffhaltige Abfall oder der Verpackungsmüll sortiert und gereinigt. Als Input dient eine Fraktion, die aus einem Gemisch unterschiedlicher Materialien besteht.

Dieses Inputmaterial wird zerkleinert [ZERKLEINERN] und in einem oder mehreren anschließenden Wasch- und Trennschritten [WASCHEN/TRENNEN] von anhaftenden Verunreinigungen getrennt. Die Trennung erfolgt dabei in Dichtetrennbecken mit geeigneten Dichtetrennmedien, wie sie in Recyclinganlagen üblicherweise eingesetzt werden.

Bei dem so aufbereiteten Material wird im Reaktor [R1] der Papieranteil mittels Wasser vom restlichen Gemisch getrennt. Dies kann im Rahmen einer Dichtetrennung wie sie konventionell in Recyclinganlagen eingesetzt wird erfolgen.

Die papierhaltige Masse wird über den Filter [F1] abgetrennt und wie in Beispiel 1 beschrieben weiter verarbeitet.

Der restliche Feststoff aus [R1], der unter anderem Metall und unterschiedliche Kunststoffe enthält wird in der Einheit [F2] abgetrennt und in [R6] befördert. Hier wird nun durch den Einsatz unterschiedlicher Lösungsmittel, die unterschiedlichen Kunststoffe sequentiell gelöst und wie im Beispiel 2 beschreiben weiter verarbeitet.

Denkbar ist auch, dass die unterschiedlichen Kunststoffe und das Metall in einer vorgeschalteten Dichtetrennstufe bereits voneinander getrennt werden und dass in [R3] lediglich durch das Auflösen eine Reinigung der Kunststoffe erfolgt.

Das Metall wird wie im Beispiel 2 beschrieben abgetrennt. In der Regel ist dies alleine Aluminium. Handelt es sich um ein Gemisch von unterschiedlichen Metallen müssen diese anschließend konventionell auftrennt werden.

## Patentansprüche

1. Verfahren zur Rückgewinnung von unterschiedlichen Rohstoffen, umfassend Zellulose, Kunststoffe und Metalle aus papierhaltigen Abfällen, Verpackungsmaterialien oder Verbundwerkstoffen, wobei die Zellulose durch den Einsatz Ionischer Flüssigkeiten gelöst und die Ionischen Flüssigkeiten durch Fällung zurückgewonnen werden,
mit folgenden Schritten:
- Zerkleinern des Rohstoff-Rohmaterials,
- Trennen von anhaftenden Verunreinigungen des zerkleinerten Rohstoff-Materials durch einen oder mehrerer Wasch- und Trennschritt(e), wobei die Trennung in Dichtetrennbecken mit geeigneten Dichtetrennmedien erfolgt,
**gekennzeichnet durch**
- ein anschließendes Abtrennen des Zellulose haltigen Anteils des im zweiten Schritt aufbereiteten Materials mittels Wasser unter Erhalt einer Zellstofffraktion und einer verbleibenden Verbundfraktion,
- daran anschließendes Trocknen des Zellulose haltigen Anteils,
- Lösen der Zellulose in der Ionischen Flüssigkeit,
- Fällen der Zellulose mit einem Fällmittel,
- Abtrennen der Zellulose als Feststoff und Trocknen der Zellulose,
- Trennen der Ionischen Flüssigkeit vom Fällmittel für die Zellulose,
- Reinigen und Rückführen der Ionischen Flüssigkeit,
- Lösen des Kunststoffes aus der Verbundfraktion,
- Abtrennen des Metalls aus der Verbundfraktion als Feststoff und Trocknen des Metalls,
- Extrahieren des Lösungsmittels aus der Kunststofflösung und Rückgewinnen des restlichen Lösungsmittels aus dem Kunststoff sowie Extrudieren des Kunststoffes.

2. Verfahren nach Anspruch 1, **dadurch gekennzeichnet, dass** die verwendete Ionische Flüssigkeit, die zum Auflösen der Zellulose eingesetzt wird, eine Verbindung des Typs A⁺B⁻ ist, die als Kation ein Immidazoliumion und als Anion ein Halogenid enthält.

3. Verfahren nach Anspruch 1 oder 2, **dadurch gekennzeichnet, dass** zur Gewinnung der Kunststoffe aus der Verbundfraktion flüssige Kohlenwasserstoffe oder Gemische derselben als Lösungsmittel eingesetzt werden.

4. Verfahren nach einem der Ansprüche 1 bis 3, **dadurch gekennzeichnet, dass** das Metall nach dem Entfernen des Zellstoffes und des Kunststoffes direkt als Feststoff zur Verfügung steht.

## Claims

1. A method for recovering various raw materials comprising cellulose, plastics and metals from paper-containing wastes, packaging materials or composite materials, wherein the cellulose is dissolved using ionic liquids, and the ionic liquids are recovered by precipitation,
including the following steps:
- shredding the feedstock of raw material,
- separating adhering impurities from the shredded feedstock of raw material by one or more washing and separating steps, wherein the separating is performed in density separation tanks with suitable density separation media;
**characterized by**
- subsequently separating the cellulose-containing fraction of the material prepared in the second step by means of water while obtaining a pulp fraction and a remaining composite fraction,
- subsequently thereto, drying the cellulose-containing fraction,
- dissolving the cellulose in the ionic liquid,
- precipitating the cellulose by means of a precipitant,
- separating the cellulose as a solid matter and drying the cellulose,
- separating the ionic liquid from the precipitant for the cellulose,
- cleaning and returning the ionic liquid,
- solving the plastics from the composite fraction,
- separating the metal from the composite fraction as a solid matter and drying the metal,
- extracting the solvent from the plastic solution and recovering the residual solvent from the plastics and extruding the plastics.

2. The method according to claim 1, **characterized in that** the ionic liquid used, which is employed for dissolving the cellulose, is a compound of the type A⁺B⁻ containing an imidazolium ion as a cation and a halide as an anion.

3. The method according to claim 1 or 2, **characterized in that**, for obtaining the plastics from the composite fraction, liquid hydrocarbons or mixtures thereof are employed as solvents.

4. The method according to anyone of claims 1 to 3, **characterized in that** the metal is directly available as a solid matter after removing the cellulose and the plastics.

## Revendications

1. Procédé pour récupérer différentes matières premières comprenant la cellulose, les matières plastiques et les métaux, à partir de déchets contenant du papier, des matériaux d'emballage ou des matériaux composites, la cellulose étant dissoute par l'utilisation de liquides ioniques et les liquides ioniques étant récupérés par précipitation,
comprenant les étapes suivantes consistant à :
- fragmenter le matériau brut de la matière première,
- séparer des impuretés adhérentes du matériau brut fragmenté par une ou plusieurs étapes de lavage et de séparation, la séparation ayant lieu dans des bassins de séparation en fonction de la densité par des milieux de séparation convenables,
**caractérisé par** les étapes consistant à
- séparer successivement la part contenant de la cellulose du matériau traité dans la seconde étape, par de l'eau en obtenant une fraction de pâte de cellulose et une fraction composite restante,
- puis sécher la part contenant la cellulose,
- dissoudre la cellulose dans le liquide ionique,
- précipiter la cellulose par un agent de précipitation,
- séparer la cellulose à titre de matière solide et sécher la cellulose,
- séparer le liquide ionique de l'agent de précipitation pour la cellulose,
- purifier et recycler le liquide ionique,
- dissoudre la matière plastique hors de la fraction composite,
- séparer le métal hors de la fraction composite à titre de matière solide et sécher le métal,
- extraire le solvant hors de la solution de matière plastique et récupérer le solvant restant de la matière plastique et extruder la matière plastique.

2. Procédé selon la revendication 1, **caractérisé en ce que** le liquide ionique utilisé pour dissoudre la cellulose est un composé du type A⁺B⁻ qui contient à titre de cation un ion d'imidazolium et à titre d'anion un halogénure.

3. Procédé selon la revendication 1 ou 2, **caractérisé en ce que** pour récupérer les matières plastiques à partir de la fraction composite, on utilise à titre de solvant des hydrocarbures liquides ou leurs mélanges.

4. Procédé selon l'une des revendications 1 à 3, **caractérisé en ce qu'**après avoir enlevé la pâte de cellulose et la matière plastique, le métal est disponible directement sous forme de matière solide.
